Europäisches Patentamt

European Patent Office

Office européen des brevets

(11) Veröffentlichungsnummer: **0 036 220**
**B1**

(12) **EUROPÄISCHE PATENTSCHRIFT**

(45) Veröffentlichungstag der Patentschrift:
**14.08.85**

(51) Int. Cl.⁴: **F 02 B 53/04**

(21) Anmeldenummer: **81102756.4**

(22) Anmeldetag: **10.04.81**

(54) **Mittelachsige Rotationskolben-Brennkraftmaschine.**

(43) Veröffentlichungstag der Anmeldung:
**23.09.81 Patentblatt 81/38**

(45) Bekanntmachung des Hinweises auf die Patenterteilung:
**14.08.85 Patentblatt 85/33**

(84) Benannte Vertragsstaaten:
**CH DE FR GB IT NL SE**

(56) Entgegenhaltungen:
**DE - A - 2 405 706**
**DE - A - 2 902 915**
**DE - C - 2 252 453**
**FR - A - 1 454 467**
**FR - A - 1 593 043**

(73) Patentinhaber: **Zocca, Secondo, 9, Rue Gay-Lussac, F-59110 La Madeleine (FR)**

(72) Erfinder: **Zocca, Secondo, 9, Rue Gay-Lussac, F-59110 La Madeleine (FR)**

(74) Vertreter: **Ecrepont, Robert Pierre, 12 Place Simon Vollant, F-59800 Lille (FR)**

## Beschreibung

Die Erfindung betrifft eine Rotationskolben-Brennkraftmaschine mit Zweitaktbetrieb, insbesondere Vorrichtungen und Anordnungen für die Sicherstellung einer sachgemässen Wechselbewegung eines Kolbens in dessen sich kontinuierlich drehenden Zylinder.

Das deutsche Patent 2 252 453 des Anmelders beschreibt eine Zweitakt-Brennkraftmaschine, bei welcher eine Schwungscheibe aus Zylindern und Kolben, die kranzförmig Ende an Ende aneinandergereiht sind, mit einem Gehäuse zusammenwirkt, das (aufgrund seiner Ausstattung) gleichbedeutend ist mit einer bestimmten Anzahl von Zylinderköpfen und Zylindern der Zweitakt-Brennkraftmaschine, die ebenfalls kranzförmig aneinandergereiht sind, nämlich zur Bildung einer Anzahl von Betriebszyklen, die gleich dem Produkt der Anzahl der Zylinder mal jener der Zylinderköpfe sind.

Diese Brennkraftmaschine erzielt (im Vergleich zu Rotationskolben-Brennkraftmaschinen mit Zweitaktbetrieb einer anderen Art) ein grösseres Saugvolumen, nämlich aufgrund der besonderen Anordnung der sich hin und her bewegenden Kolben in deren sich gleich- bzw. regelmässig drehenden Zylindern. Jeder Zylinder weist zwei verschiebliche Zylinderlaufbuchsen auf, die in radialer Richtung nach der Innenseite die Schliessung ihres Zylinders sicherstellen und dabei in letzterem eine Ansaugkammer bilden, deren radiale Abmessungen merklich grösser sind als die einer zweiten Kammer, in der die Verbrennung stattfindet. Dieses Ergebnis vergrössert die Möglichkeiten der Anpassung einer solchen Brennkraftmaschine an die Verwendung verschiedener Brennstoffe.

Ausserdem sind die «Zylinderköpfe des Gehäuses», die mit den für einen Zweitakt-Betrieb notwendigen Vorrichtungen ausgestattet sind, in Winkelrichtung gleichmässig auf diesem Gehäuse verteilt, und aufgrund einer Anzahl von «Zylinderköpfen», die sich um «eins» von jener der Zylinder der Schwungscheibe unterscheidet, erfolgen die Zündungen nacheinander in regelmässiger Folge von einem Zylinderkopf zu dem nächsten Zylinderkopf des Gehäuses, so dass ein bemerkenswert gleichmässiger Betrieb der Brennkraftmaschine erreicht wird.

Allerdings kann im Verhältnis zu der grossen Anzahl von Betriebszyklen, die mit einer Umdrehung der Welle der Brennkraftmaschine einhergehen, diese Regelmässigkeit des Betriebs durch die geringe Fehlerhaftigkeit der Kolbensteuerung gefährdet sein.

Damit liegt der Erfindung die Aufgabe zugrunde, eine präzise und zuverlässige Vorrichtung für die abwechselnde Steuerung der Kolben einer solchen Brennkraftmaschine in deren Zylinder zur Verfügung zu stellen.

Dazu ist jeder der Kolben mit einer Vorrichtung für den Ausgleich der Umkehrungen, die an den Extremstellen der Hypozykloidenbögen erzeugt werden, des zykloidenartigen Mechanismus verbunden und sind die Kolben und deren Steuermechanismen durch Systeme koaxialer Hohlwellen gehalten, die in bezug zueinander frei drehbar sind, wobei diese Systeme beweglich an der Welle der Brennkraftmaschine festgelegt sind.

Ein Kolben kann also während eines Arbeitstaktes in bezug auf das Gehäuse in einer praktisch unbeweglichen Lage gehalten und in bezug auf seinen Zylinder in eine Wechselbewegung gesetzt werden, wodurch ein zuverlässiger und guter Betrieb der Brennkraftmaschine geschaffen wird.

Solche Systeme ermöglichen eine relativ einfache Montage der Kolbensteuermechanismen in lateraler Lage und beabstandet von den Zylindern der Schwungscheibe, was zu einer zufriedenstellenden Funktion letzterer beiträgt.

Nach einem weiteren vorteilhaften Merkmal der Erfindung, das im Zusammenhang mit einer Brennkraftmaschine mit einer geraden Zahl von Kolbenzylindern gilt, ist in jedem Kolbenzylinder ein Zusatzkolben montiert und durch den Kolben eines anderen Zylinders gesteuert, dessen Funktion in bezug auf den ersten Kolben um einen «Takt» phasenverschoben ist.

Die Kolben einer solchen Variante sind paarweise angeordnet, so dass die inhärenten Schwierigkeiten verringert werden, insbesondere bei den Verdichtungsphasen, wobei diese Schwierigkeiten umso stärker werden, je grösser das Verhältnis des Ansaugvolumens ist. Daraus resultiert ein geschmeidiger Betrieb der Brennkraftmaschine.

In einer vorzugsweisen Ausgestaltung der Erfindung sind bei Verwendung von zwei gesteuerten Kolbengruppen mit je vier Kolben die Einlass- und Auslasskanäle sowie die Zündvorrichtungen in einer Teilung von 72° am Umfang der Wandung des Motorgehäuses angeordnet. Es ergibt sich hierdurch, dass nach jeweils 72° ein vollständiger Arbeitstakt vollzogen ist, und dass bei einer Zündfolge im Gegenuhrzeigersinn alle 18° Schwungscheibendrehung immer einer der vier Kolben zündet. Währenddessen durchlaufen die drei anderen Kolben entweder die erste oder die zweite Hälfte eines Expansionshubes oder eines Kompressionshubes. Ein und derselbe Kolben zündet wiederum nach Durchlauf von fünf Kammern alle 72°, während er zwischen der ersten und fünften Kammer den Expansions- und den Kompressionshub vollführt. Während einer Schwungscheibendrehung erfolgen demnach 20 Explosionen, 20 Expansionshübe und 20 Kompressionshübe der Kolben. Da von den 20 Explosionen immer 5 Explosionen gleichzeitig stattfinden und während 90° Schwungscheibendrehung immer 5 Explosionen erfolgen, verteilen sich diese am Umfang der vom kreisringförmigen Gehäusemantel gebildeten Ringkammer äusserst gleichmässig, so dass sich schon aus diesem Grunde Laufruhe und ein elastisches Verhalten der Brennkraftmaschine ergeben.

Zur Umwandlung der ungleichförmigen Drehbewegung der Kolben beider Kolbengruppen in eine gleichförmige Drehbewegung der in irgend einer Weise mit ihnen gekoppelten Abtriebswelle oder Schwungscheibe der Brennkraftmaschine ist ein Steuerungs- oder Führungsgetriebe erforderlich, welches seine Übersetzung in Abhängigkeit von den Arbeitstakten periodisch ändert, um die stossweise entstehende Energie von den Kolben auf die Abtriebswelle oder die Schwungscheibe zu übertragen.

Allgemein bekannt sind im Stand der Technik der Rotationskolben-Brennkraftmaschinen Steuerungen der Kolben und Leistungsübertragung auf die Abtriebs- oder Kurbelwelle nach dem Freilaufprinzip, mittels elliptischer Zahnräder, mittels feststehender Kurvenscheiben und Kurvengetrieben sowie mittels Zahnräderkurbelgetrieben. Die meisten bekannten Lösungen haben den Nachteil, dass die Kolbensteuerung in den Verbrennungsraum der Kolben eingreift. Daraus ergeben sich fertigungstechnische Probleme hinsichtlich der Abdichtung der Steuerungsgetriebeteile gegenüber dem Verbrennungsraum.

Es liegt daher nahe und es ist grundsätzlich auch bekannt, das Steuerungs- oder Führungsgetriebe für die Kolben ausserhalb des Verbrennungsraums anzuordnen. Schwierigkeiten ergeben sich hierbei jedoch dann, wenn beide Kolbengruppen gesteuert werden sollen und die zwischen zwei in Umfangsrichtung gegenüberliegenden Kolben bei der Zündung entstehende Energie auf die Abtriebswelle bzw. das Schwungrad der Brennkraftmaschine übertragen werden soll.

Durch die bevorzugte Führung und Abstützung der Kolben beider Kolbengruppen gegenüber der Schwungscheibe über Kurbelgetriebe und deren Koppelung miteinander durch einen gegensinnigen Antrieb der zugehörigen Kurbelgetriebe ergibt sich eine zur kontinuierlichen Schwungscheibendrehung überlagerte Bewegung in Umfangsrichtung, also eine kombinierte Pendeldrehbewegung der Kolben beider Kolbengruppen in dem Sinne, dass sich bei entsprechender Zeitsteuerung der Kolben in bezug auf die Einlass- und Auslasskanäle und die Zündvorrichtungen definierte Beschleunigungs- und Verlangsamungsphasen zwischen jeweils zwei eine Arbeitskammer begrenzenden Kolben ergeben. Hierdurch wird eine präzise und weich arbeitende Steuerung über den gesamten Bewegungszyklus erreicht und eine Brennkraftmaschine geschaffen, bei der während jedes Arbeitshubes eine Vergrösserung des Kolbenweges nutzbar gemacht werden kann, so dass sich bei gegebenen Kolbenabmessungen und gegebener Hubstrecke eine hohe effektive Verdrängung ergibt. Insgesamt wird ein energiesparendes Verfahren und die Möglichkeit geschaffen, unterschiedliche Brennstoffe verwenden zu können.

Weitere Einzelheiten der Erfindung ergeben sich aus den abhängigen Ansprüchen.

Der Gegenstand der Erfindung ist in der Zeichnung beispielsweise dargestellt.

Fig. 1 zeigt in einem Längsmittelquerschnitt durch die Brennkraftmaschine entlang der Linie I–I die Anordnung der Kolben und der mit ihnen zusammenwirkenden Kolbenblöcke zur Bildung von Arbeitskammern,

Fig. 2 zeigt eine schematische Darstellung der Zündfolge,

Fig. 3 zeigt in einer schematischen Schnittdarstellung die Anordnung der Führungsgetriebe zur Steuerung der Kolben nach einer ersten Ausführungsform,

Fig. 4 zeigt in einer schematischen Darstellung den Bewegungsablauf eines Führungsgetriebes zur Steuerung eines der Kolben während des Expansionshubes,

Fig. 5 zeigt einen Längsschnitt durch die Anlenkung der Pleuelstange innerhalb des Führungsgetriebes nach Fig. 4,

Fig. 6 zeigt in einer schematischen Schnittdarstellung die Anordnung der Führungsgetriebe zur Steuerung der Kolben nach einer zweiten Ausführungsform entlang der Linie VI–VI in Fig. 7,

Fig. 6a bis 6e zeigen in schematischen Darstellungen den Bewegungsablauf einer exzenterkompensierten Kurbelstange während des Expansionshubes,

Fig. 7 zeigt einen schematisch gehaltenen Längsschnitt durch die Brennkraftmaschine,

Fig. 8 zeigt in einer schematischen Schnittdarstellung die Anordnung der Führungsgetriebe zur Steuerung von in den Kolbenblöcken verschiebbar gelagerten Zusatzkolben,

Fig. 9 zeigt in einer schematischen Schnittdarstellung entlang der Linie IX–IX in Fig. 7 die Anordnung der Führungsgetriebe nach Fig. 8 mit zusätzlicher Kraftübertragung auf das Führungsgetriebe für die Kolben,

Fig. 10 bis 15 zeigen in schematischen Darstellungen den Bewegungsablauf der Kolben und die Zündfolge,

Fig. 16 und 17 zeigen in schematischen Darstellungen den Bewegungsablauf eines Kolbenpaares und eines Zusatzkolbenpaares während eines Expansionshubes und gleichzeitig eines Kompressionshubes,

Fig. 18 zeigt die Anordnung der Führungsgetriebe für Kolben und Zusatzkolben auf einer gemeinsamen Welle und

Fig. 19 zeigt in einem Längsmittelquerschnitt durch die Brennkraftmaschine die Anordnung der Kolben und der mit ihnen zusammenwirkenden Kolbenblöcke nach einem abgewandelten Ausführungsbeispiel.

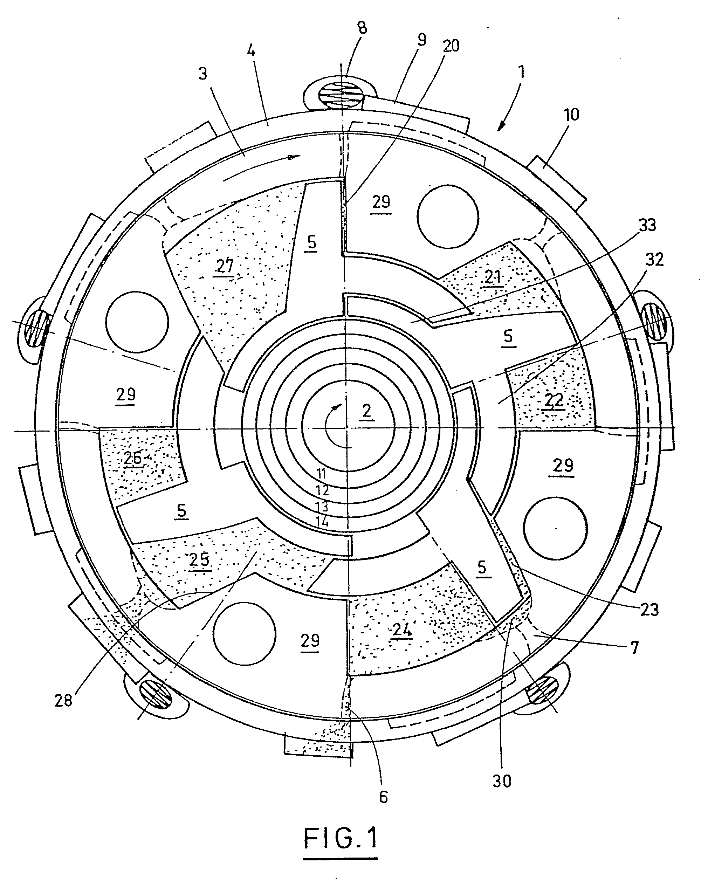

Wie Fig. 1 zeigt, ist in einem von einer zylinderförmigen Wandung 4 umschlossenen Gehäuse 1 auf einer Welle 2 eine Schwungscheibe 3 drehfest gelagert. Das gesamte Gehäuse bzw. die zylinderförmige Wandung ist in fünf Sektoren zu je 72° unterteilt. Jeder Sektor entspricht einer Arbeitskammer für die im Zweitaktverfahren betriebene Brennkraftmaschine. Entsprechend sind alle 72° am Umfang der zylinderförmigen Wandung zueinander gleichmässig winkelversetzt fünf Kraftstoff-Einspritzvorrichtungen oder Zündkerzen 8, fünf Einlasskanäle 9 für die Frischluftzufuhr und fünf Auslasskanäle 10 für die Abgase angeordnet.

In dem von seitlichen Abschlusswänden 34 begrenzten umlaufenden Teil der Brennkraftmaschine, nämlich am Umfang der Schwungscheibe 3 sind alle 90° jeweils zueinander gleichmässig winkelversetzt vier Einlassöffnungen 7 für die Frischluftzufuhr sowie vier Auslassöffnungen 6 für die Abgase vorgesehen.

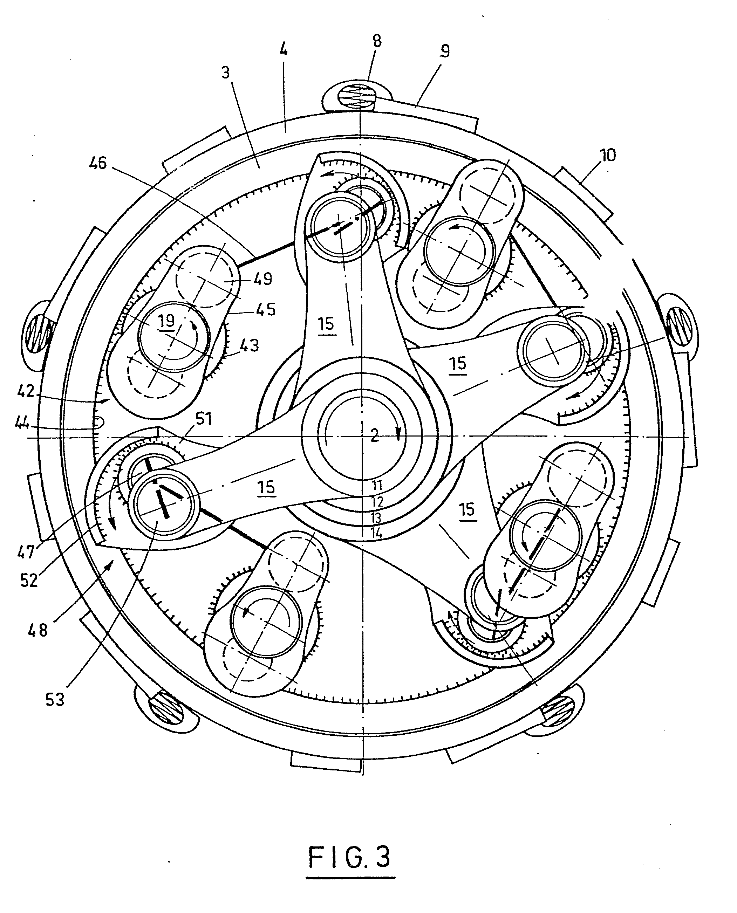

Das Umlaufkolbensystem besteht aus vier um jeweils 90° winkelversetzt an der inneren Umfangsfläche der Schwungscheibe befestigten Kolbenblöcken 29, die mit vier gesteuerten, nämlich beschleunigt und verzögert umlaufenden Kolben 5 zusammenwirken. Mit der Welle 2 sind diese Kolben 5 derart verbunden, dass sie jeweils über Arme 15 (Fig. 3) an vier Hohlwellen 11 bis 14 befestigt sind, die einzeln frei drehbar und unabhängig voneinander auf der Welle 2 gelagert sind.

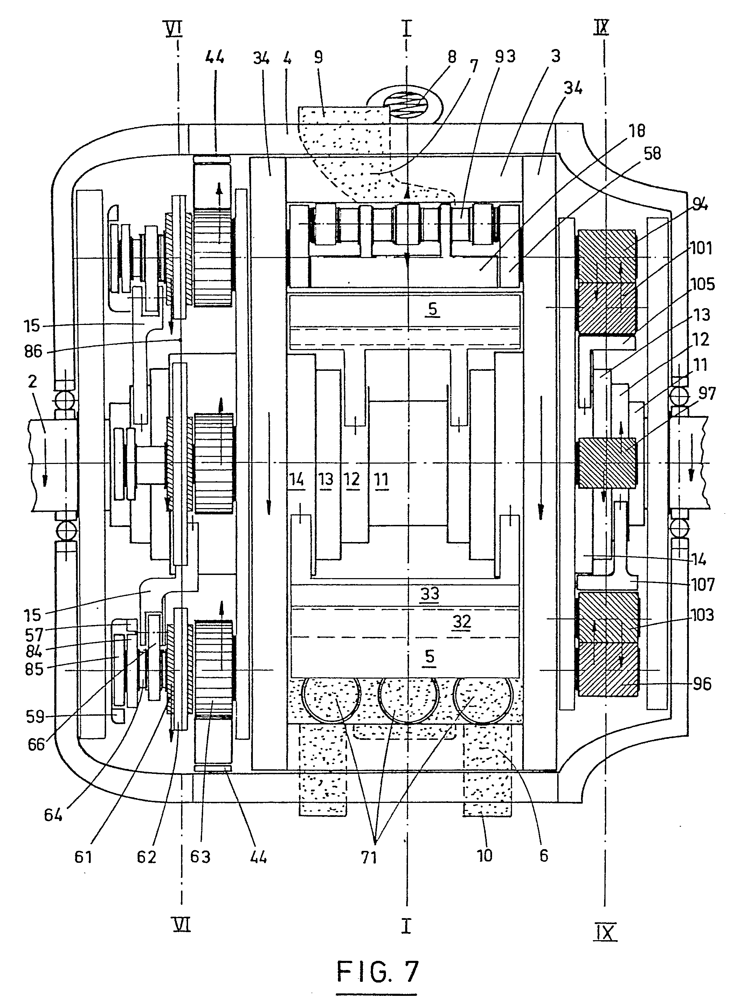

Wie Fig. 7 zeigt, sind diese Hohlwellen in zwei Teilabschnitten konzentrisch übereinander auf der Welle 2 gelagert, wobei ihre jeweilige Länge radial von innen nach aussen abnimmt. An der jeweils überstehenden Länge ist der zugehörige Arm 15 für einen der Kolben 5 befestigt.

Die in Fig. 1 mit 20 bis 27 angegebenen Arbeitskammern werden jeweils begrenzt von in Umfangsrichtung gegenüberliegenden Flächen je eines Kolbenblockes 29 und eines gesteuerten Kolbens 5, sowie radial nach aussen durch die innere Umfangsfläche der Schwungscheibe und radial nach innen durch in Umfangsrichtung verlaufende Zungen 32, 33. Diese Zungen 32, 33 sind an der Vorder- und an der Rückseite eines jeden Kolbens 5 angeformt, wobei die in Drehrichtung der Schwungscheibe nacheilenden Zungen 33 an der Rückseite der Kolben eine geringere radiale Erstreckung aufweisen als die an der Vorderseite angeformten voreilenden Zungen 32, welche zudem noch an ihrem radial inneren Bereich in Umfangsrichtung so weit ausgespart sind, dass sie die nacheilenden Zungen 33 des jeweils benachbarten vorlaufenden Kolbens auf deren gesamten Länge aufnehmen können. Hierdurch kann auf der Rückseite des Kolbens, an der der Expansionshub erfolgt, unabhängig vom jeweiligen Abstand zwischen einer Stirnwand 28 des Kolbenblocks 29 und dem benachbarten Kolben 5 eine grosse Arbeitskammer erzielt werden, wohingegen sich an der Vorderseite des Kolbens, an der der Kompressionshub erfolgt, eine kleine Arbeitskammer bildet. Unmittelbar vor dem Zünden wird diese kleine Arbeitskammer auf ein Minimum zusammengedrängt.

Die radiale Versetzung der Zungen 32 und 33 an der Vorder- bzw. Rückseite des Kolbens ist so gewäht, dass die radial weiter aussen liegende Zunge 32 an die innere Umfangsfläche der Kolbenblöcke 29 dichtend anschliesst und die radial weiter innen, an der Rückseite des Kolbens 4 angeformte Zunge 33 unter die an der Vorderseite des darauffolgenden Kolbens angebrachte Zunge 32 eingeschoben werden kann, wie dies bei den die Arbeitskammer 23 in Fig. 1 der Zeichnung bildenden Flächen der Fall ist.

Bei der erfindungsgemässen Brennkraftmaschine handelt es sich um einen Zwei-Takt-Motor. Nach jeweils 72° ist ein Arbeitshub vollzogen. Hieraus resultiert auch die Teilung des Gehäuses in fünf Sektoren zu je 72°.

Legt man für die jeweiligen Arbeitshübe die Stellungen der Kolben 5 in Fig. 1 zugrunde, so finden in jeder von zwei Kolbenblöcken 29 begrenzten Doppelkammer, in Umlaufrichtung der Schwungscheibe 3 gesehen, zu einem bestimmten Zeitpunkt die folgenden Arbeitsphasen statt:

Kammer 21:
Ende der ersten Hälfte des Kompressionshubes;

Kammer 22:
Ende der ersten Hälfte des Expansionshubes;

Kammer 23:
Ende des ersten Kompressionshubes, Überströmen in Kammer 24 durch die Überströmmulde 30;

Kammer 24:
Ende des Expansionshubes und Austritt der Abgase durch Auslassöffnung 6 und Auslasskanal 10 sowie Wiedereintritt des Gemisches aus der ersten Kompressionsphase;

Kammer 25:
Ende der ersten Hälfte des Ansaugens von Frischluft durch Einlasskanal 9 und Einlassöffnung 7;

Kammer 26:
Ende der ersten Hälfte des zweiten Kompressionshubes;

Kammer 27:
Ende des Ansaughubes;

Kammer 20:
Ende des Kompressionshubes und Zündung.

Die Zuordnung von fünf Arbeitskammern zu vier Kolben ist nicht auf das Ausführungsbeispiel der Fig. 1 beschränkt, jedoch muss sich die Anzahl der Arbeitskammern von der Anzahl der Kolben um eine unterscheiden. Ist ein Kolben mehr vorgesehen als Arbeitskammern vorhanden sind, verlaufen die Rotationen der Schwungscheibe als auch die Zündfolge in Fig. 1 im Uhrzeigersinn nach rechts. Ist jedoch wie im vorliegenden Ausführungsbeispiel ein Kolben weniger vorgesehen als Arbeitskammern vorhanden sind, verläuft nur die Rotation der Schwungscheibe nach rechts, dagegen die Zündfolge im Gegenuhrzeigersinn nach links.

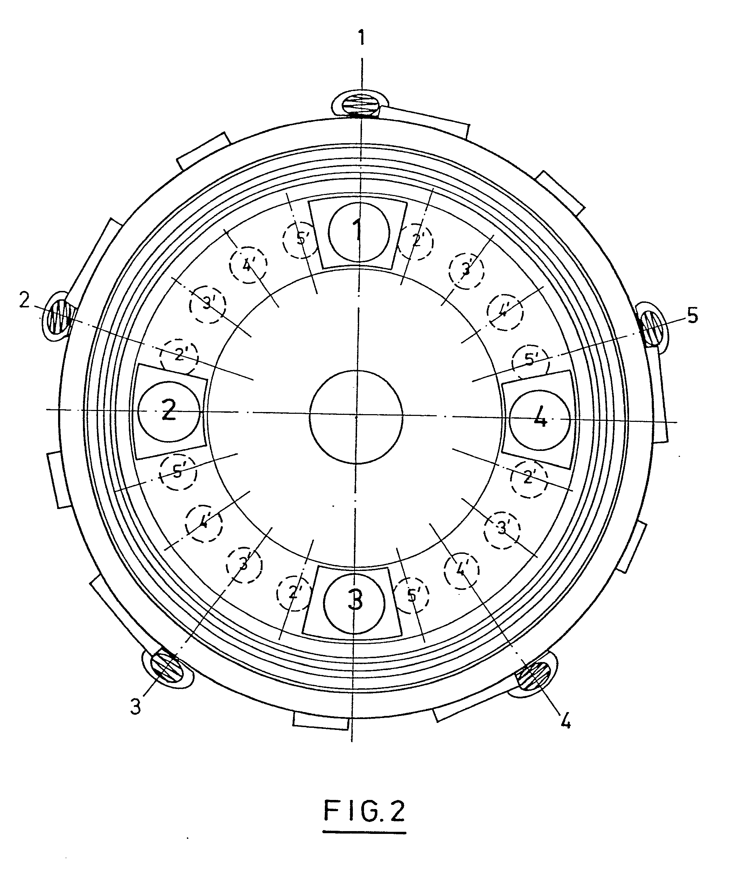

Anhand der Fig. 2 lässt sich während einer Umdrehung der Schwungscheibe bei Drehung der vier Kolben 5A, 5B, 5C, 5D im Uhrzeigersinn die Zündfolge und die Zündzeitpunkte aller vier Kolben ableiten.

Ordnet man den vier Kolben die Ordnungszahlen 1, 2, 3, 4 und den jeweils auf den ersten 72° einer Viertelumdrehung verteilten Arbeitskammern die Ordnungszahlen 1', 2', 3', 4', 5' zu, so ergibt sich der folgende Zündablauf:

| Nummer der Arbeitskammern in Drehrichtung: | 1' | 2' | 3' | 4' | 5' |
|---|---|---|---|---|---|
| Nummer des Kolbens/ Nummer der Explosion: | 1/1 | 2/1 | 3/1 | 4/1 | 1/2 |
| | 2/2 | 3/2 | 4/2 | 1/3 | 1/3 |
| | 3/3 | 4/3 | 1/4 | 2/4 | 3/4 |
| | 4/4 | 1/5 | 2/5 | 3/5 | 4/5 |

In der 0°-Stellung zündet zum ersten Mal in der Kammer 1' der sie begrenzende Kolben 1. Nach 18° Schwungscheibendrehung, sobald also der Kolben 1 während der ersten Viertelumdrehung der Schwungscheibe die Kammer 2' passiert, zündet zum ersten Mal in einer Kammer 2' der Kolben 2. Nachdem der Kolben 1 den Expansionshub von insgesamt 72° vollendet hat, zündet zum ersten Mal in einer Kammer 3' der Kolben 3. Nach 54° Schwungscheibendrehung zündet zum ersten Mal in einer Kammer 4' der Kolben 4. Nach insgesamt 72° Schwungscheibendrehung hat der Kolben 1 den Kompressionshub vollendet, befindet sich in der Kammer 5' und zündet dort zum zweiten Mal. Beim Erreichen einer Viertelumdrehung der Schwungscheibe wiederholt sich der Zyklus, indem zunächst der Kolben 2 in der Kammer 1' zum zweiten Mal zündet.

Aus dieser Zündfolge wird ersichtlich, dass alle 18° Schwungscheibendrehung immer einer der vier Kolben zündet, wobei die Zündfolge im Gegenuhrzeigersinn verläuft. Währenddessen durchlaufen die drei anderen Kolben entweder die erste oder die zweite Hälfte eines Expansionshubes oder eines Kompressionshubes. Ein und derselbe Kolben zündet wiederum nach Durchlauf von fünf Kammern alle 72°, während er zwischen der ersten und fünften Kammer den Expansions- und den Kompressionshub vollführt. Während einer Schwungscheibenumdrehung erfolgen demnach 20 Explosionen, 20 Expansionshübe und 20 Kompressionshübe der Kolben.

Die Zündungen werden dann ausgelöst, wenn an der Schwungscheibe vorgesehene Kontakte mit am feststehenden Gehäuse angeordneten Kontakten in Berührung kommen.

Wie Fig. 3 zeigt, kann jeder der Arme 15 nur gemeinsam mit der zugeordneten Hohlwelle in bezug auf die Welle 2 im Sinne einer sich der allgemeinen Umlaufbewegung mit der Schwungscheibe überlagernden Pendeldrehbewegung verdreht werden, so dass jeder der Kolben 5 während seiner Umlaufbewegung im Sinne sich periodisch wiederholender Verzögerungen und Beschleunigungen zwangsgesteuert ist.

Zu diesem Zweck besteht zwischen jedem Arm 15 und den mit der Schwungscheibe 3 verbundenen seitlichen Abschlusswänden 34 eine kinematische Verbindung in Form eines Kurbelgetriebes 42. Dieses Kurbelgetriebe ist ausserhalb der sich drehenden Motorteile und damit ausserhalb der einen seitlichen Abschlusswand 34 angeordnet und besitzt ein Zahnrad 43, das auf radialem Abstand zur Welle 2 auf einer Welle 19 in der Abschlusswand gelagert ist und von einem mit Innenverzahnung versehenen, konzentrisch zur Welle 2 angeordneten feststehenden Zahnkranz 44 bei Rotation der Schwungscheibe 3 in Drehung versetzt wird. Dreht sich die Welle 2 beispielsweise in Fig. 3 im Uhrzeigersinn, so wird das Zahnrad 43 jedes Kurbelgetriebes 42 im Gegenuhrzeigersinn angetrieben. Das Übersetzungsverhältnis zwischen Zahnrad 43 und Zahnkranz 44 ist durch Bemessung des Durchmessers des Zahnrades 43 in bezug auf den Durchmesser des Zahnkranzes 44 so gewählt, dass nach einer Fünfteldrehung der Welle 2 ein mit dem Zahnrad 43 verbundener Kurbelarm 45 eine volle Umdrehung ausgeführt hat und sich wieder in der gleichen Ausgangslage befindet.

Die Verbindung des Kurbelgetriebes 42 mit dem Arm 15 und damit die Zwangssteuerung der Kolben 5 erfolgt durch eine in Fig. 3 nur angedeutete Pleuelstange 46, die mit ihrem einen Ende mit dem gestrichelt angedeuteten Kurbelzapfen 49 des Kurbelarms 45 und mit ihrem anderen Ende mit einer Kurbel 47 eines am Arm 15 angeordneten zweiten Kurbelgetriebes 48 gelenkig verbunden ist. Die Drehbewegung des Kurbelarms 45 um das Zahnrad 43 wird bei jeder Zündung durch den auf den Kolben 5 wirkenden Verbrennungsdruck unterstützt, indem die hierbei entstehende Schubkraft über die Pleuelstange 46 am Kurbelzapfen 49 mit einem Hebelarm zur Achse des Zahnrades 43 in einer solchen Richtung angreift, dass die Wirkungslinie der Pleuelstange 46 immer auf den Punkt gerichtet ist, an dem gerade das entgegen der Richtung der Schwungscheibe umlaufende Zahnrad 43 mit dem feststehenden Zahnkranz 44 kämmt. Hierdurch wird dem Zahnrad 43 beim Abwälzen am Zahnkranz 44 ein positives Drehmoment erteilt, welches sich in eine Drehbewegung der Schwungscheibe umsetzt mit der Folge, dass sich das Zahnrad 43 am feststehenden Zahnkranz 44 abstützt und die Wirkungslinie der Pleuelstange 46 in bezug auf die Längsachse des Kurbelarms 45 unter einem Winkel von etwa 40° schräggestellt ist. Hierdurch können Totpunktlagen nicht entstehen, so dass die Drehung der Schwungscheibe unbeeinträchtigt bleibt.

Während des auf die Zündung folgenden Explosionshubes von 36° wird der Kurbelzapfen 49 annähernd in der gleichen Lage festgehalten, während der Kurbelarm 45 entgegen der Drehung der Schwungscheibe weiterdreht. Der Kurbelzapfen 49 vollführt währenddessen allerdings eine begrenzte Ausgleichbewegung in radialer Richtung. Damit sich diese radiale Ausgleichsbewegung nicht auf den Kolben 5 überträgt, ist die Pleuelstange 46 nicht unmittelbar an den mit dem Kolben 5 verbundenen Arm 15 angelenkt, sondern über das zweite Kurbelgetriebe 48, und zwar an dessen Kurbel 47, die mit einem Zahnsegment 51 versehen ist, welches sich an einem mit der Schwungscheibe umlaufenden Zahnsegment 52 periodisch abwälzt.

Während der nächsten 36° Schwungscheibendrehung erfolgt der Expansionshub des Kolbens 5, indem der Kurbelzapfen 49 und damit der Kolben 5 nun gegenüber der Schwungscheibe 3 mit im Mittel doppelter Geschwindigkeit vorauseilt und hierbei über insgesamt 36° eine zykloidenförmige Vorwärtsbewegung vollführt. Währenddessen haben sich seit Zündung Schwungscheibe 3 und Kolbenblock 29 um insgesamt 72° fortgewegt, und der Kolben 5 befindet sich, wie Fig. 1 zeigt, zwischen der Kammer 21 und der Kammer 22.

Insgesamt wird während des ersten Arbeitstaktes von 72° die Schwungscheibe in der ersten Arbeitstakthälfte durch die mit Schubkraft am Kurbelgetriebe 42 angreifende Pleuelstange 46 in Drehung versetzt und in der zweiten Arbeitstakthälfte bei fortgesetzter Rotation des Kurbelarms 45 und beschleunigtem Voreilen des Kolbens 5 in Drehung gehalten, währenddessen ein anderer kolben seine erste Hälfte des Arbeitstaktes durchläuft.

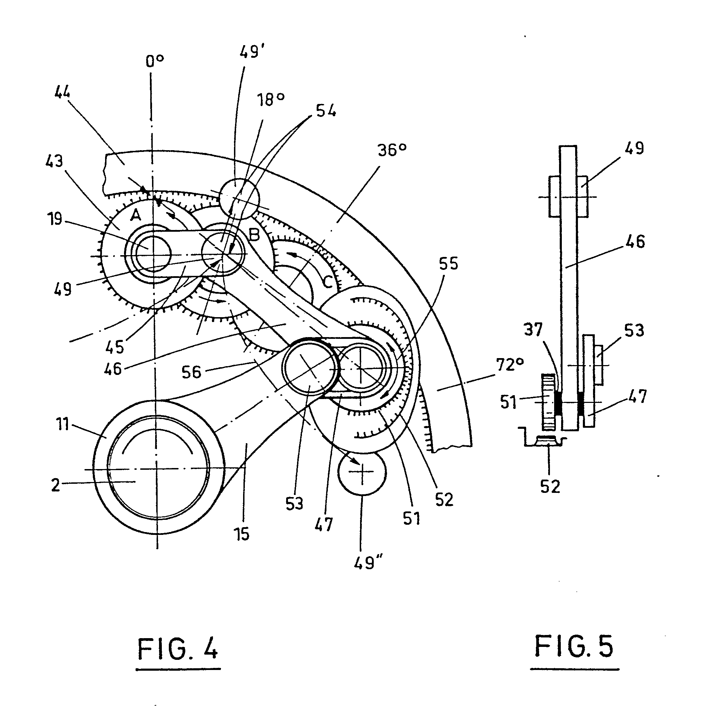

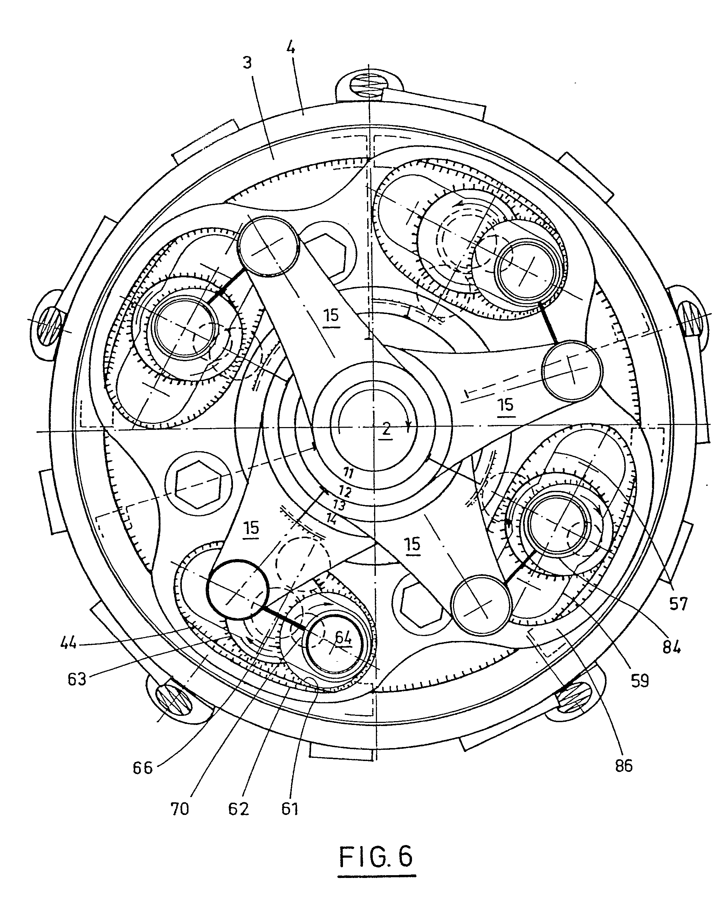

Fig. 3 zeigt die Kopplung zwischen dem ersten und dem zweiten Kurbelgetriebe nur schematisch. In Fig. 4 und 5 ist die Anlenkung der Pleuelstange am zweiten Kurbelgetriebe 48 näher veranschaulicht. Fig. 4 zeigt darüberhinaus die Stellung des Zahnrades 43 und des Kurbelzapfens 49 sowie des Arms 15 während der ersten 36° Winkeldrehung des auf der Welle 19 sitzenden Zahnrades 43 in bezug auf die Welle 2.

Wie Fig. 5 zeigt, ist an dem dem Kurbelzapfen 49 entgegengesetzten Ende der Pleuelstange 46 ein Zapfen 37 gelagert. Auf der einen Seite der Pleuelstange 46 ist auf diesem Zapfen 37 die Kurbel 47 frei drehbar aufgesteckt, deren anderes Ende einen Kupplungszapfen 53 zum gelenkigen Anschluss des Arms 15 aufweist. Auf der anderen Seite der Pleuelstange sitzt frei drehbar auf dem Zapfen 37 ein Zahnsegment 51, welches sich an einem halbmondförmigen Zahnsegment 52 abwälzen kann.

In Fig. 4 sind die drei Stellungen A, B, C des auf der Welle 19 gelagerten Zahnrades 43 dargestellt, und zwar in einer Ausgangslage (0°), in einer Lage B nach 18° Winkeldrehung der Schwungscheibe in bezug auf die Welle 2 und in einer Lage C nach 36° Winkeldrehung.

Es sei angenommen, dass der mit dem Zahnrad 43 über den Kurbelarm 45 verbundene Kurbelzapfen 49 in der Ausgangslage A 90° zu der in Fig. 4 eingezeichneten, durch die Welle 2 und durch die Welle 19 gehenden Mittelsenkrechten zu liegen kommt. Bei Drehung der Schwungscheibe 3 im Uhrzeigersinn wälzt sich das Zahnrad 43 am feststehenden Zahnkranz 44 im Gegenuhrzeigersinn ab. Nach 18° Winkeldrehung des Zahnrades 43 in bezug auf die Welle 2, nach der das Zahnrad 43 die Stellung B erreicht hat, hat sich der Kurbelzapfen 49 in bezug auf die Welle 19 des Zahnrades 43 in der Zeichenebene der Fig. 4 um 72° verdreht. Er befindet sich hierbei auf grösstem radialen Abstand von der Welle 2, was in Fig. 4 mit 49' angedeutet ist. Nach weiteren 18° Winkeldrehung des Zahnrades 43 in bezug auf die Welle 2, nach der das Zahnrad 43 die Stellung C erreicht hat, hat sich der Kurbelzapfen 49 in bezug auf die Welle 19 des Zahnrades 43 um weitere 72°, also bezüglich der Ausgangslage um insgesamt 144° verdreht. Er befindet sich jetzt in der gleichen Lage, die er in der Ausgangslage des Zahnrades 43 eingenommen hat.

Während dieser 36° Winkelverdrehung des Zahnrades 43 in bezug auf die Welle 2 bewegt sich der Kurbelzapfen 49 ausschliesslich in der durch die Welle 2 gehenden Radialebene nach aussen und wieder zurück in die Ausgangslage, was in Fig. 4 mit Pfeilen 54 angedeutet ist.

Diese Bewegung macht auch das mit dem Kurbelzapfen 49 verbundene Ende der Pleuelstange 46 mit. Das entgegengesetzte Ende der Pleuelstange führt währenddessen durch Abwälzen des Zahnsegments 51 an dem halbmondförmigen Zahnsegment 52 eine Ausgleichsbewegung aus, was in Fig. 4 mit dem Pfeil 55 angedeutet ist. Dabei wandert das Zahnsegment 51 durch Abwälzen am Zahnsegment 52 im Uhrzeigersinn nach oben, wenn sich der Kurbelzapfen 49 nach oben bewegt. Bei der entgegengesetzten Bewegung des Kurbelzapfens 49 in Richtung seiner Ausgangslage (Stellung C) wandert das Zahnsegment 51 durch Abwälzen am Zahnsegment 52 im Gegenuhrzeigersinn nach unten.

Wenn das Zahnsegment 52 mit konstantem Krümmungsradius zur Achse des Kupplungszapfens 53 verläuft, verdreht sich während der Ausgleichsbewegung des Zahnsegments 51 die Kurbel 47 lediglich um den Kupplungszapfen 53, während der Arm 15 in der Zeichenebene und im Raum stillsteht. Damit bleibt aber auch der mit dem Kolben 5 verbundene Teil des Arms 15 in der Zeichenebene bzw. im Raum stehen. Bei sich drehender Schwungscheibe 3 bedeutet dies jedoch ein Nacheilen des Kolbens um 36° Schwungscheibendrehung.

Nach Ablauf dieser ersten 36° Schwungscheibendrehung wird der Kolben 5 jedoch beschleunigt angetrieben, da der Kurbelzapfen 49 entlang des in Fig. 4 mit dem Pfeil 56 eingezeichneten Weges verläuft, bis er in der Zeichenebene nach insgesamt 72° Winkeldrehung in bezug auf die Welle 2 die in Fig. 4 mit 49'' angedeutete Lage eingenommen hat. Nach weiteren 18° Winkeldrehung, also nach insgesamt 90° Winkeldrehung, würde der Kurbelzapfen 49 wieder die dem grössten radialen Abstand von der Welle 2 entsprechende Stellung einnehmen, also 90° (18 + 72°) winkelversetzt zu der durch die Achse der Welle 19 verlaufenden Mittelsenkrechten und damit wieder in der gleichen Stellung wie in der Ausgangsstellung A.

Aus diesem Bewegungsablauf ergibt sich eine solche Steuerung des Kolbens 5, dass dieser abwechselnd alle 36° Schwungscheibendrehung im Raum stillsteht und der Schwungscheibe nacheilt und dann beschleunigt angetrieben wird und der Schwungscheibe vorauseilt. In der Stellung A des auf der Welle 19 gelagerten Zahnrades 43 und des mit diesem über den Kurbelarm 45 verbundenen Kurbelzapfens 49 (0°-Stellung) beginnt der Expansionshub in der mit dem betreffenden Kolben 5 zusammenwirkenden Kammer. In der Stellung B (nach 18° Schwungscheibendrehung) ist die Hälfte des Expansionshubes erreicht, während in der Stellung C (nach 36° Schwungscheibendrehung) der Expansionshub und damit der erste Arbeitstakt des Arbeitsspiels vollendet ist.

Der dann während der nächsten 36° Schwungscheibendrehung beschleunigt angetriebene Kolben 5 vollführt in der ihm zugeordneten Kammer den Kompressionshub, bis nach insgesamt 72° Schwungscheibendrehung der Kolben in bezug auf die Schwungscheibe zum Stillstand kommt, womit der zweite Arbeitstakt des Arbeitsspiels abgeschlossen ist. Alle 72° Schwungscheibendrehung ist somit ein aus Nacheilen und Vorauseilen bestehendes Arbeitsspiel und somit ein Expansionshub und ein Kompressionshub des Kolbens vollführt, so dass sich während einer Umdrehung der Schwungscheibe fünf Arbeitsspiele jedes Kolbens ergeben.

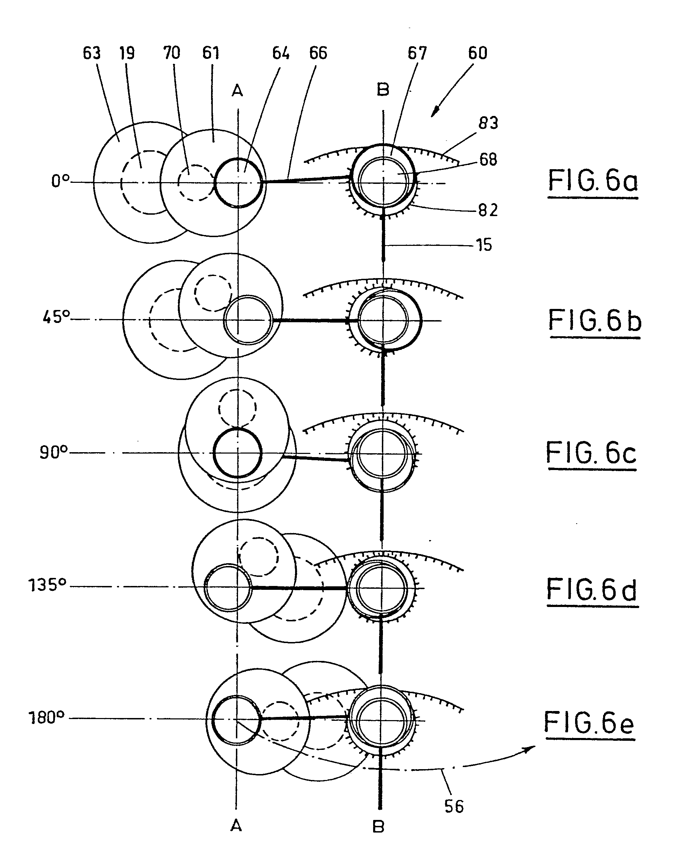

Bei dem abgewandelten Ausführungsbeispiel der Fig. 6 tritt an die Stelle des sich in Fig. 3 am festen Zahnkranz 44 abwälzenden Zahnrades 43 ein Zahnrad 63 und an die Stelle des Kurbelzapfens 49 ein Zahnrad 61, welches sich an einem Zahnkranz 62 von ovalförmiger Umfangsgestalt mit Innenverzahnung abwälzt. Die vier gleichmässig verteilten Zahnkränze 62 befinden sich, wie auch Fig. 7 andeutungsweise zeigt, in einer mit den Zahnrädern 63 umlaufenden Tragscheibe 86. Beide Zahnräder 61 und 63 sind frei drehbar exzentrisch an einem Zapfen 70 gelagert und laufen in entgegengesetzten Drehrichtungen um, wobei sie sich periodisch voneinander entfernen, sich einander nähern und sich kreuzen können und wobei sie zwischen Schienen 57, 59 über Rollen 84, 85 geführt werden.

Das sich am Zahnkranz 62 abwälzende Zahnrad 61 trägt exzentrisch einen Kurbelzapfen 64, der schliesslich über eine in Fig. 6 nur angedeutet eingezeichnete Kurbelstange 66 mit dem freien Ende jedes der Arme 15 verbunden ist, so dass auch hier durch die kombinierten Abwälzbewegungen der Zahnräder 61 und 63 und die zugehörigen Kraftübertragungsmittel das Schwungrad in seiner Drehbewegung unterstützt wird und die freien Enden der Arme 15 und damit die Kolben 5 eine kombinierte Dreh- und Pendelbewegung ausführen.

Im Ausgangspunkt der Explosion befindet sich das Zahnrad 61 in einer zum Zahnrad 63 um 18° voreilenden Lage. Während das Zahnrad 63, abgesehen von seiner eigenen Rotation, die Schwungscheibendrehung mitmacht, bewegt sich das Zahnrad 61 auf das Zahnrad 63 zu. Am Ende des Expansionshubes hat das Zahnrad 61 eine in bezug auf das mit der normalen Schwungscheibendrehung fortlaufende Zahnrad 63 eine um 18° nacheilende Lage, so dass während dieser 36° Schwungscheibendrehung das Ende des Arms 15 und damit der Kolben 5 im Raum stehengeblieben ist.

Zu Beginn des zweiten Taktes und während der nächsten 36° Schwungscheibendrehung wird das Zahnrad 61 mit einer im Vergleich zum Zahnrad 63 doppelten Umlaufgeschwindigkeit der Schwungscheibe in Drehrichtung bewegt, überholt das Zahnrad 63 und beendet diesen Rückgewinnungshub von 72° wieder mit einer um 18° voreilenden Lage zum Zahnrad 63, wo es sich nach insgesamt 72° Schwungscheibendrehung wieder zum Zahnrad 63 in der gleichen Ausgangslage befindet wie zu Beginn des ersten Arbeitstaktes.

Während sich also das sich am Zahnkranz 44 abwälzende Zahnrad 63 um 72° kontinuierlich in Drehrichtung bewegt hat, hat das sich am Zahnkranz 62 abwälzende Zahnrad 61 nur innerhalb des zweiten Arbeitstaktes diese 72° mit doppelter Geschwindigkeit zurückgelegt, ist demnach in dieser Phase beschleunigt in Drehrichtung bewegt worden. Am Ende des zweiten Arbeitstaktes ist die vom Kolben 5 und Kolbenblock 29 gebildete Arbeitskammer auf eine Minimum zusammengedrängt und für die Explosion bereit.

Die Ausführungsvariante der Fig. 6 hat gegenüber dem Ausführungsbeispiel der Fig. 3 den Vorteil, dass die Massen besser beherrscht werden können. Hierzu ist es wesentlich, dass die Kurbelstange 66 an das Ende des Arms 15 über eine als Ausgleichsgetriebe wirkende Exzenterwelle 60 angeschlossen ist, wodurch bei dem gegensinnigen Umlauf der Zahnräder 61 und 63 keine zu grossen Massenkräfte in radialer Richtung der Schwungscheibe entwickelt werden, vielmehr Ausgleichsbewegungen in Umfangsrichtung der Schwungscheibe entstehen.

Anhand des in den Fig. 6a bis 6e schematisch dargestellten Bewegungsablaufs lässt sich erkennen, wie sich während des kontinuierlichen Umlaufs des sich am Zahnkranz 44 abrollenden Zahnrades 63 das an diesem über den Zapfen 70 exzentrisch angelenkte Zahnrad 61, der hieran befestigte Kurbelzapfen 64 und die Kurbelstange 66 während eines Umlaufs der Schwungscheibe von 36° bewegen. Das Zahnrad 63 ist mit dem auf der Welle 19 gelagerten Zahnrad 43 nach dem Ausführungsbeispiel der Fig. 3 bis 5 vergleichbar.

Hierbei bedeuten die Winkelstellungen 0°, 45°, 90°, 135° und 180° die jeweiligen Stellungen, die der Zapfen 70 bezogen auf die Umfangsrichtung mit dem Kurbelzapfen 64 einschliesst, an dem das eine Ende der Kurbelstange 66 angelenkt ist. Die 90°-Stellung des Zapfens 70 entspricht 18° Schwungscheibendrehung und die 180°-Stellung entspricht 36° Schwungscheibendrehung. In der Ausgangsstellung (0°-Stellung) und in den Winkelstellungen 90° und 180° des Zapfens liegt der mit der Kurbelstange 66 verbundene Kurbelzapfen 64 auf der im Zeichnungsblatt der Fig. 6a bis 6e eingezeichneten Linie A–A, wohingegen er in der 45°- und 135°-Stellung rechts und links hiervon mit etwas Abstand zu liegen kommt, d. h. in der allgemeinen Umlaufrichtung etwas vor- oder nacheilt.

Um diese Ausgleichsbewegung des Kurbelzapfens 64 von der Anlenkstelle der Kurbelstange 66 am Arm 15 fernzuhalten, ist das Ende der Kurbelstange 66 über die Exzenterwelle 60 mit dem Arm 15 verbunden, in dem dieses Kurbelstangenende an einem Exzenter 67 angelenkt ist, während das Ende des Arms 15 mit dem konzentrischen Teil 68 der Exzenterwelle 60 gelenkig verbunden ist. Mit dem Teil 68 ist wiederum ein Zahnrad 82 verbunden, das sich bei der Kompensationsbewegung des Exzenters 67 an einem Zahnkranz 83 abstützt. Diese Ausweichbewegungen des Exzenters führen dazu, dass der Arm 15 in den Stellungen der Fig. 6a bis 6e immer in der auf den Mittelpunkt der Welle 2 gerichteten Linie B–B verbleibt, so dass während dieser Phase der mit dem Arm 15 verbundene Kolben 5 im Raum stehen bleibt. In der nächsten Phase von 36° Schwungscheibendrehung, die den Kompressionshub bedeutet, vollführt dagegen der Kurbelzapfen 64 in bezug auf das kontinuierlich weiterlaufende Zahnrad 63 eine beschleunigte Bewegung, wie dies in Fig. 6e mit dem Pfeil 56 angedeutet ist. Entsprechend wird der mit dem Kurbelzapfen 64 gekoppelte Kolben 5 beschleunigt bewegt.

Beim Ausführungsbeispiel der Fig. 1 sind die mit den gesteuert umlaufenden Kolben 5 zusammenwirkenden Kolbenblöcke 29 fest an der Schwungscheibe 3 angeordnet und die Kolbenblöcke 29 sind an der in Umlaufrichtung der Schwungscheibe befindlichen Stirnfläche durch Stirnwände 28 begrenzt. Die Aussenfläche der Stirnwände 28 ist der Fläche des jeweils vorlaufenden Kolbens 5 angepasst und läuft am radial äusseren Ende in eine Überströmmulde 30 ein.

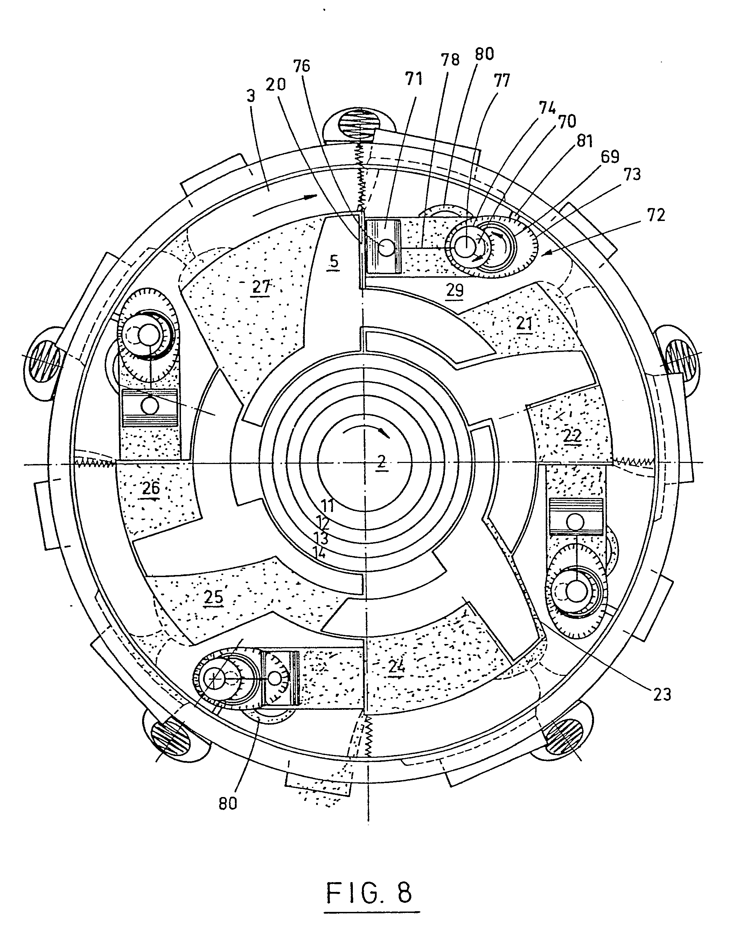

Wie Fig. 8 zeigt, ist bei einer abgewandelten Ausführung im Innern jedes der Kolbenblöcke 29 in Umlaufrichtung gleitbeweglich ein Zusatzkolben 71 angeordnet, der in bezug auf den nacheilenden Kolben 5 während der allgemeinen Umlaufbewegung eine im wesentlichen gegensinnige Pendeldrehbewegung ausführt, d.h. auch diese Zusatzkolben 71 laufen beschleunigt und verzögert um, entfernen sich vom nacheilenden Kolben 5, wenn dieser verzögert umläuft, und bewegen sich auf diesen zu, wenn dieser beschleunigt umläuft. Hierdurch werden die Arbeitskammern 20 bis 27 nochmals in ihrer Grösse verändert.

Zur Steuerung der Zusatzkolben 71 dient ein Kurbelgetriebe 72, das einen an der Schwungscheibe 3 befestigten Zahnkranz 43 von ovaler Umfangsgestalt mit Innenverzahnung aufweist, an dem sich ein Zahnrad 74 abwälzt. Die Hauptachsen des Zahnkranzes 73 sind in bezug auf die Umlaufrichtung schrägwinklig angestellt. Der Zahnkranz hat eine etwa der radialen Breite der Zusatzkolben 71 entsprechende Breitenerstreckung.

Die Abwälzbewegung des Zahnrades 74 innerhalb des Zahnkranzes 73 ist mit der Bewegung des sich am Zahnkranz 44 abwälzenden Zahnrades 43 oder 63 des Kurbelgetriebes 42 gekoppelt, indem ein am Zahnrad 43 oder 63 über einen Zapfen 70 angelenkter Kurbelarm 69 mit der Welle 19 drehfest verbunden ist, wodurch sich zum besseren Massenausgleich ein grösserer Abstand zum Kurbelzapfen 49 ergibt.

Zur Kraftübertragung ist ein den vorzugsweise ebenfalls hohl ausgebildeten Zusatzkolben 71 durchsetzender Kolbenzapfen 76 mit einem exzentrisch auf dem Zahnrad 74 sitzenden Kurbelzapfen 77 über eine in der Zeichnung nur angedeutet dargestellte Pleuelstange 78 verbunden. Mit dem auf die Umfangsrichtung projizierten Schwingungshub des Kurbelzapfens 77 bewegt sich somit der Zusatzkolben 71 innerhalb seines Kolbenblocks 29 im Rahmen der allgemeinen Umlaufbewegung. Längs des Schwingungshubes bewegt sich der Zusatzkolben 71 um 52° vorwärts, während der Kolben 5 um 36° voreilt. Um die einer Winkelstellung von 72° entsprechende Endlage des darauffolgenden Hubes zu erreichen, muss der Kolben 5 um 32° und der Zusatzkolben 71 um 20° voreilen. Für den Zusatzkolben ist dies während des zweiten Arbeitstaktes eine in bezug auf die Bewegung des Kolbens 5 verzögerte Umlaufbewegung.

Um zusätzlich hinter den Zusatzkolben 71 Frischluft bzw. Gemisch zuzuführen, sind aus diesem Raum nach aussen führende Öffnungen 81 vorgesehen. Ein Überströmkanal 80 verbindet den Kolbenraum vor und hinter dem Kolben.

Mit dem Kolben 5 wirkt der Zusatzkolben 71 derart zusammen, dass nach Explosion in der 0°-Stellung der Kolben in der zu Fig. 3 geschilderten Funktion während 36° Schwungscheibendrehung in seiner Lage festgehalten wird und damit der Schwungscheibe nacheilt, wobei das auf das Kurbelgetriebe 42 übertragene Drehmoment sich auf die Drehung der Schwungscheibe auswirkt.

Gleichzeitig wirkt die durch den Verbrennungsdruck erzeugte Schubkraft in Umdrehungsrichtung auf den Zusatzkolben 71 und stösst diesen in den Kolbenblock 29 hinein. Durch die Koppelung des Kurbelgetriebes 72 über den Zapfen 70 mit dem Kurbelgetriebe 42 wird auf dieses Kurbelgetriebe 42 ein zusätzliches Drehmoment übertragen, welches die Drehung der Schwungscheibe noch mehr unterstützt. Es findet also eine doppelte Kraftübertragung durch Kolben 5 und Zusatzkolben 71 auf die Schwungscheibe statt, wobei sich durch die Vergrösserung der Kammer 20 zwischen Kolben 5 und Zusatzkolben 71 und die Zurückziehung der am Kolben 5 angeformten Zungen ein besonders grosses Volumen ergibt.

Im nachfolgenden Expansionshub sind die Kurbelgetriebe 42 und 72 in einem solchen Masse weitergedreht, dass die Schwungscheibe frei weiterläuft, ohne durch Totpunktlagen der Kurbelgetriebe daran gehindert zu werden.

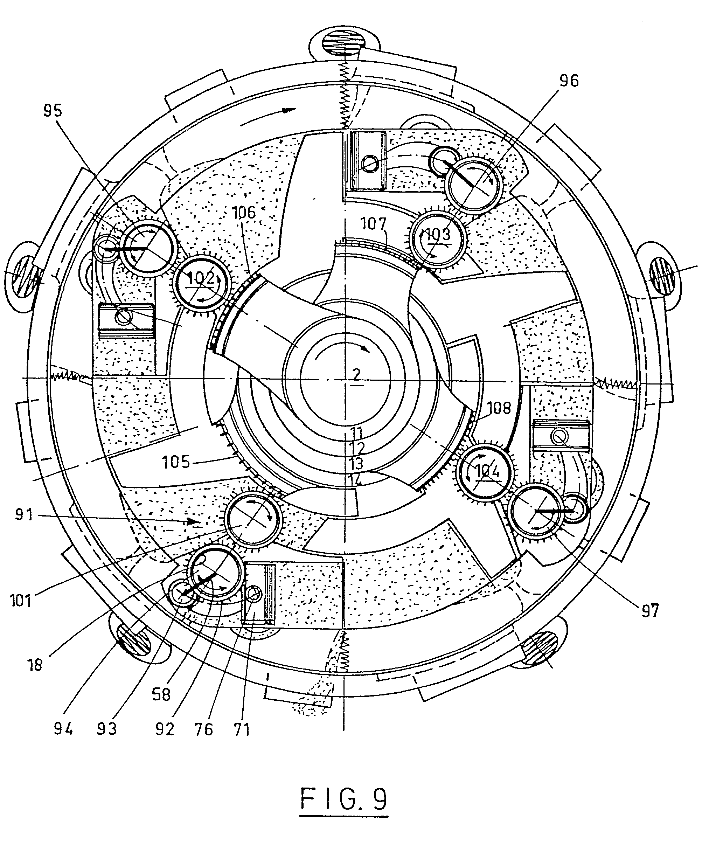

Bei dem Ausführungsbeispiel der Fig. 8 entstehen durch die Koppelung der beiden Kurbelgetriebe 72 und 42 Getriebeverluste, die im wesentlichen auf die radial gerichteten Komponenten der resultierenden Kompressionskräfte zurückzuführen sind. Dies bedeutet, dass die beim Kompressionshub benötigte Energie vom umlaufenden Schwungrad aufgebracht werden muss. Beim Expansionshub wird die nach der Explosion frei werdende Energie allein über die Koppelung der beiden Kurbelgetriebe 72 und 42 und die Steuerung der Kolben 5 auf das Schwungrad übertragen. Bei der Ausführungsvariante nach Fig. 9 ist daher ein Kurbelgetriebe 91 vorgesehen, über das die beim Explosionshub des Zusatzkolbens 71 entstehende Energie über einen anderen Weg dem Schwungrad zugeführt wird. Die bei jeder Explosion in einer Kammer frei werdende Energie bzw. der sich hieraus ergebende Verbrennungsdruck verteilt sich also insgesamt auf beide gegenüberliegende Flächen vom Kolben 5 und Zusatzkolben 71, so dass beide Kolben 5 und 71 in entgegengesetzte Richtungen expandieren.

Zu diesem Zweck ist der den Zusatzkolben 71 durchsetzende Kolbenzapfen 76 über eine in Fig. 9 nur angedeutet wiedergegebene Pleuelstange 92 mit einem Kurbelzapfen 93 verbunden, der exzentrisch an einem von der Welle 19 mitgeführten, auf dieser frei drehbar gelagerten Zahnrad 94 sitzt. Jeweils vier Zahnräder 94, 95, 96 und 97 sind um 90° winkelversetzt über die vier Wellen 19 an der Schwungscheibe 3 frei drehbar gelagert und den vier Zusatzkolben 71 zugeordnet. Die Zahnräder 94 bis 97 führen daher entsprechend der hin und her gehenden Zusatzkolben 71 Pendeldrehbewegungen aus.

Jedes dieser Zahnräder steht mit einem ebenfalls winkelversetzt gelagerten, der Drehrichtungsumkehr dienenden Zwischenzahnrad 101, 102, 103 und 104 in Eingriff, und jedes dieser Zwischenzahnräder kämmt mit einem Zahnsegment 105, 106, 107 und 108, von denen jedes mit einer der vier Hohlwellen 11, 12, 13 und 14 in fester Verbindung steht.

Die Hubbewegung der Zusatzkolben 91 wird also über den Kurbelzapfen 93 des Kurbelgetriebes 91 in eine Pendeldrehbewegung der Zahnräder 94 bis 97 umgesetzt. Diese Pendeldrehbewegung wird gegenläufig über die Zwischenzahnräder 101 bis 104 auf die Zahnsegmente 105 bis 108 und damit auf die Hohlwellen 11 bis 14 übertragen. Da mit den Hohlwellen aber auch über die Arme 15 und die Pleuelstangen 46 die Kurbelgetriebe 42 in Verbindung stehen, lässt sich in besonders vorteilhafter Weise die bei der Explosion in einer Arbeitskammer entstehende Schubkraft auf den dann in den Kolbenblock 29 hineingestossenen Zusatzkolben 71 für die Kompression einer solchen Arbeitskammer ausnutzen, welche annähernd diametral zu der Kammer gegenüberliegt, in der die Expansion erfolgt.

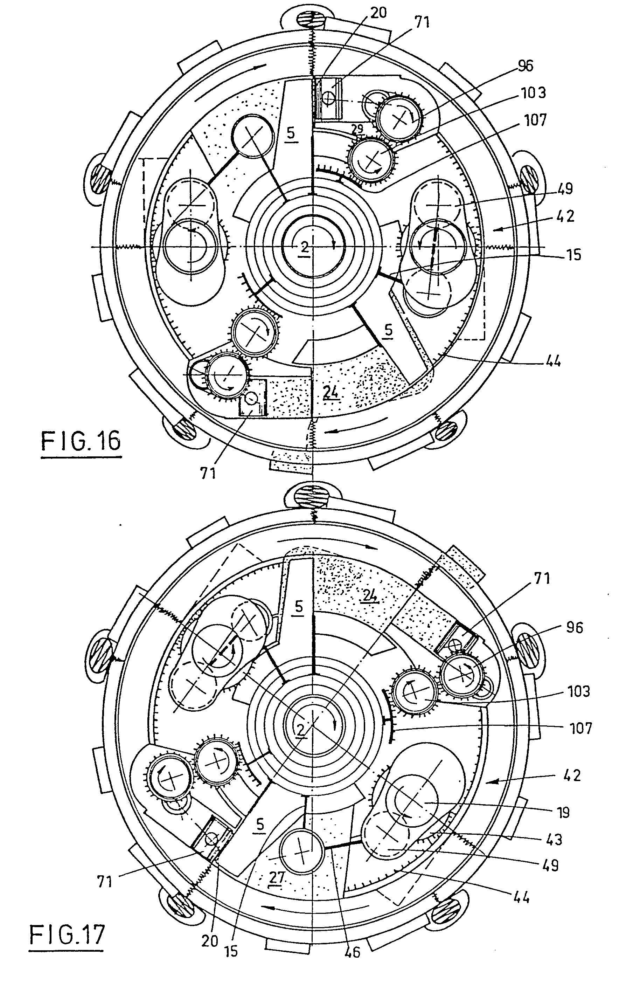

Dies zeigen am deutlichsten die Fig. 16 und 17, in denen die Stellungen der Kolben 5 mit den zugehörigen Kurbelgetrieben 42 und der Zusatzkolben 71 mit den zugehörigen Zahnradpaaren von zwei diametral gegenüberliegenden Kolbenpaarungen zu Beginn und zum Ende des Expansionshubes, also vor und nach einer Schwungscheibendrehung von 36°, gegenübergestellt sind. Die andere gegenüberliegende Kolbenpaarung ist aus Gründen besserer Übersichtlichkeit der Zeichnung weggelassen.

In Fig. 16 ist deutlich erkennbar, dass sich der in der 0°-Stellung befindliche Kolben 5 und Zusatzkolben 71 mit geringstem Abstand gegenüberliegen und zwischen sich die auf ein Minimum zusammengedrängte Arbeitskammer 20 begrenzen. Das Zahnradpaar 96 und 103 befindet sich hierbei an dem in Fig. 16 rechten Rand des Zahnsegments 107, welches in den Fig. 16 und 17 an der äussersten Hohlwelle befestigt ist.

Nach 36° Schwungscheibendrehung, also nach Vollendung des Expansionshubes, hat der Kolben 5 noch immer seine Ausgangsstellung behalten, während der Zusatzkolben 71 voll in das Innere des Kolbenblocks 29 eingefahren ist, wie dies Fig. 17 zeigt. Die den Kolben 5 und 71 begrenzende Arbeitskammer 24 hat sich hierbei auf ihr Maximalvolumen vergrössert. Das Zahnradpaar 96 und 103 befindet sich in dieser Stellung an dem in Fig. 17 oberen bzw. in bezug auf die Drehrichtung hinteren Ende des Zahnsegmentes 107. Das an der gleichen äussersten Hohlwelle über die Pleuelstange 46 angelenkte Kurbelgetriebe 42 hat sich während dieser 36° Schwungscheibendrehung in bezug auf die Achse der Welle 2 um 180° gedreht und hierbei dem in der unteren Zeichnungshälfte befindlichen Kolben 5 den Kompressionshub erteilt, bis dieser dem ausgefahrenen Zusatzkolben 71 in der unteren Zeichnungshälfte mit geringstem Abstand gegenüberliegt. Nach beendeter Expansion in der Arbeitskammer 24 ist also die diametral gegenüberliegende Arbeitskammer 20 voll komprimiert und zur Zündung vorbereitet.

Aus der Gegenüberstellung wird deutlich, dass der Kolben 5 während des Kompressionshubes in Drehrichtung 72° zurückgelegt hat, währenddessen der Zusatzkolben 71 bei seinem Herausfahren aus dem Kolbenblock 29 nur einen Winkelweg von 18° zurückgelegt hat und dem beschleunigten Kolben 5 entgegengekommen ist.

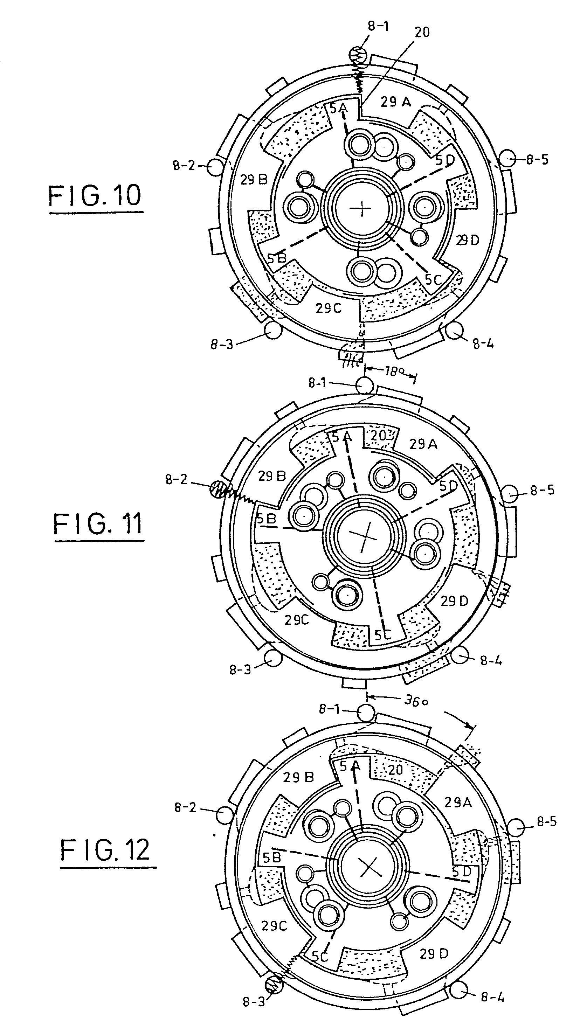

Die Relativbewegungen der Kolben 5 in bezug auf die Kolbenblöcke 29 sowie die Zündfolge zeigen die Fig. 10 bis 15. Dabei entspricht die Stellung der Kolben in Fig. 10 derjenigen in Fig. 1.

Betrachtet man den Verlauf der Arbeitskammer 20, die vom Kolben 5A und vom Kolbenblock 29A begrenzt wird, während eines Arbeitshubes, und geht man davon aus, dass die Kolbenstellung in Fig. 10 eine Ausgangsstellung ist, dann verläuft die Drehbewegung der Schwungscheibe 3 im Uhrzeigersinn und die Zündfolge im Gegenuhrzeigersinn.

In der Ausgangsstellung der Fig. 10 befinden sich Kolben 5A und Gegenkolben 29A im Zündpunkt der Zündkerze 8–1. Das Gemisch in der Arbeitskammer 20 ist hierbei auf kleinstem Raum komprimiert. Nach der Zündung bewegt sich bei noch stillstehendem Kolben 5A der Kolbenblock 29A während seines Expansionshubes um 18°, wonach die von den Kolben 5B und 29B begrenzte Arbeitskammer in den Zündpunkt der Zündkerze 8–2 gelangt, wie Fig. 11 zeigt.

Nach weiteren 18° Schwungscheibendrehung, also nach insgesamt 36° ab Zündung, hat der Kolbenblock 29A den in Fig. 12 gezeigten Expansionshub beendet. Zu diesem Zeitpunkt gelangt die von den Kolben 5C und 29C begrenzte Arbeitskammer in den Zündpunkt der Zündkerze 8–3. Während des gesamten Expansionshubes des Kolbenblockes 29A, also bis dieser 36° Drehung zurückgelegt hat, bleibt der Kolben 5A in seiner Ruhestellung, bedingt durch das ihn steuernde Kurbelgetriebe, welches währenddessen eine Umdrehung von 180° vollführt hat.

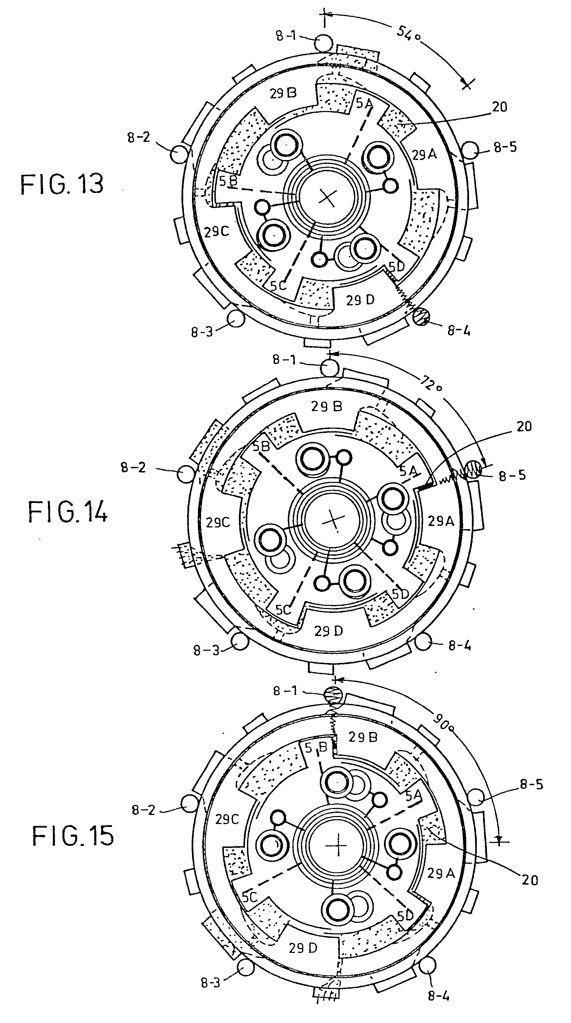

Nach 36° Drehbewegung des Kolbenblocks 29A (Fig. 12) beginnt der Kolben 5A nachzueilen und beginnt den Ansaug- und Kompressionshub in der Kammer 20. Nach 54° Drehbewegung des Kolbenblocks 29A (Fig. 13), wonach sich die von den Kolben 5D und 29D begrenzte Arbeitskammer im Zündpunkt der Zündkerze 8–4 befindet, hat der die Arbeitskammer 20 begrenzende Kolben 5A den Kolbenblock 29A um 36° aufgeholt, wodurch die Arbeitskammer 20 auf einen Bogenwinkel von 18° verkleinert worden ist.

Nach weiterer 18° Drehbewegung, also nach insgesamt 72° Drehbewegung des Kolbenblocks 29A, hat der nacheilende Kolben 5A den Kolbenblock 29A voll eingeholt und hat hierbei das Gemisch in der Kammer 20 auf kleinstem Raum zusammengedrückt. In dieser Winkelstellung befindet sich, wie Fig. 14 zeigt, die Kammer 20 wieder in einem Zündpunkt, und zwar im Zündpunkt der Zündkerze 8–5. Während der gesamten Drehbewegung bis 72° hat das den Kolben 5A steuernde Kurbelgetriebe eine Drehung von 360° vollführt.

Zu Beginn des nächsten Arbeitstaktes bleibt während 36° Drehbewegung des Kolbenblocks 29A der Kolben 5A wieder stehen. Hat der Kolbenblock 29A die Schwungscheibe um eine Vierteldrehung, also um 90°, mitgenommen, befindet sich die von den Kolben 5B und 29B begrenzte Kammer, wie Fig. 15 zeigt, im Zündpunkt der Zündkerze 8–1.

Aus dieser Arbeitsweise wird ersichtlich, dass alle 18° Drehbewegung des Schwungrades eine Zündung mit im Gegenuhrzeigersinn ablaufender Folge eintritt, dass also während einer Umdrehung der Schwungscheibe zwanzig Zündungen stattfinden. Entsprechend finden während einer Umdrehung der Schwungscheibe zwanzig Expansionshübe statt, die sich aber auf jeweils 36°, also insgesamt auf 720°, verteilen, da der Kolben 5 während der ersten 36° nach dem Zünden zurückbleibt und erst nach 36° den Kompressionshub beginnt, so dass für die Rückgewinnung 72° zur Verfügung stehen.

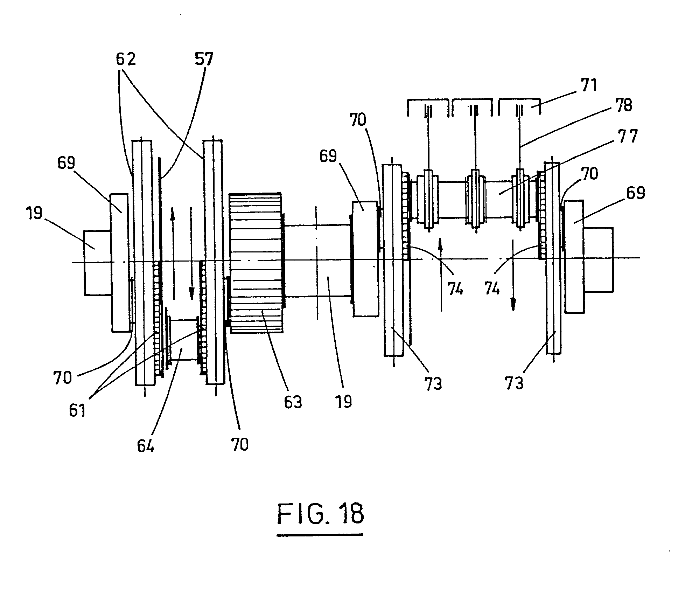

Die gemeinsame Lagerung der Kurbelgetriebe für die Kolben 5 und die Zusatzkolben 71 auf der Welle 19 zeigt Fig. 18. Hierin sind in der rechten Hälfte die Steuerteile für den Hilfskolben 71 und in der linken Hälfte die Steuerteile für den Kolben 5 angeordnet. Hiernach sind die Zahnräder 69 und 63 konzentrisch zur Welle 19 und alle übrigen Getriebeteile exzentrisch zu dieser Welle ausgelegt. Die Gegenüberstellung zeigt auch deutlich die Gegenläufigkeit der beiden Kurbelgetriebe, von denen immer das eine Getriebe in der Zeichenebene der Fig. 18 nach unten und damit in Umlaufrichtung der Welle 19 beispielsweise nach vorn bewegt wird, wenn sich das andere Getriebe, bezogen auf die Umlaufrichtung der Welle 19, zurückbewegt.

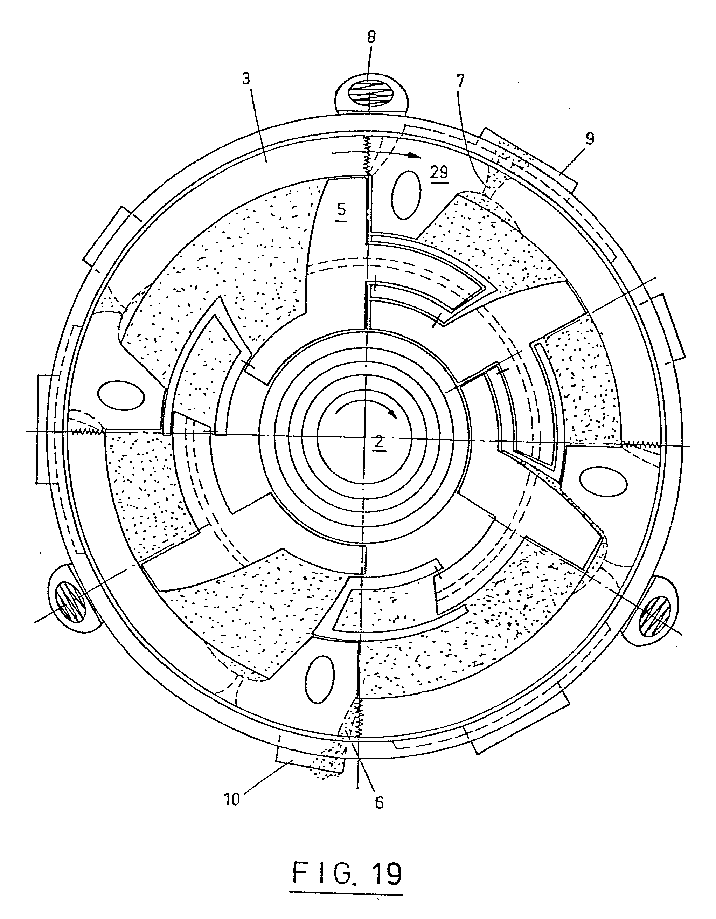

Die Erfindung ist nicht auf die in den Fig. 1 bis 18 beschriebenen Ausführungsbeispiele beschränkt. Im Rahmen der Erfindung ist auch eine Ausführungsvariante denkbar, die sich aus Fig. 19 ergibt, bei der drei Einlässe und Auslässe mit vier Kolben und Kolbenblöcken zusammenwirken, sofern durch Dimensionierung der Arbeitskammern und durch Steuerung der Kolben und der Kolbenblöcke dafür gesorgt wird, dass die Kolben für jeden Hub bzw. für jeden Arbeitstakt in ihre richtige Stellung gebracht werden.

Bei der Ausführungsvariante nach Fig. 19 besitzt der Motor jeweils drei Zündkerzen 8, drei Einlasskanäle 9 und drei Auslasskanäle 10. Diese wirken zusammen mit den in Umlaufrichtung jeweils vor den vier um 90° versetzt an der Schwungscheibe 3 angeordneten Kolbenblöcken 29 angeordneten vier Einlassöffnungen 7 für die Frischluftzufuhr und den hinter den Kolbenblöcken angeordneten vier Auslassöffnungen 6 für den Auslass der Verbrennungsgase. In Fig. 19 ist gerade die obere Einlassöffnung 7 mit dem Einlasskanal 9 und die untere Auslassöffnung 6 mit dem Auslasskanal 10 verbunden. Mit dem Kolbenblock 29 wirken die in der beschriebenen Weise gesteuerten Kolben 5 zusammen.

Expansions- und Kompressionshub verteilen sich bei dieser Ausführungsform auf 120° Drehbewegung der sich im Uhrzeigersinn drehenden Schwungscheibe 3. Alle 30° erfolgt eine Zündung in im Uhrzeigersinn ablaufender Folge, so dass während einer Umdrehung der Schwungscheibe zwölf Zündungen stattfinden. Entsprechend finden während einer Umdrehung der Schwungscheibe zwölf Expansionshübe statt, die sich aber auf jeweils 60°, also insgesamt auf 720°, verteilen, da der Kolben 5 während der ersten 60° nach dem Zünden zurückbleibt und erst nach 60° den Kompressionshub beginnt, so dass für die Rückgewinnung 120° zur Verfügung stehen.

**Patentansprüche**

1. Rotationskolben-Brennkraftmaschine, in deren Gehäuse (1) Kolben (5) und eine Schwungscheibe (3) zusammenwirken, die von einem Schwungrad gebildet wird, das an dessen Innenfläche Kolbenblöcke (29) aufweist, zwischen welche sich Kolben (5) einfügen, die Arbeitskammern (20 bis 27) begrenzen, wobei das Schwungrad an dessen Umfangseite für jeden Kolben (5) Einlassöffnungen (7) und Auslassöffnungen (6) aufweist, die mit Kraftstoff-Einspritzvorrichtungen oder Zündkerzen (8), Einlasskanälen (9), Auslasskanälen (10) zusammenwirken, die zu diesem Zweck in dem Gehäuse (1) vorgesehen sind, wobei sich deren Anzahl um eine Einheit bzw. Gruppe von der Anzahl der Kolben (5) unterscheidet und jeder Kolben (5) in seiner Arbeitskammer durch einen zykloidenartigen Mechanismus (43, 44, 45) gesteuert wird, dadurch gekennzeichnet, dass jeder Kolben mit einer Vorrichtung (47, 52) für den Ausgleich der Umkehrungen, die an den Extremstellen der hypozykloiden Bögen erzeugt werden, des zykloidenartigen Mechanismus (43, 44, 45) verbunden ist und dass die Kolben (5, 71) und deren Steuermechanismen (45, 49) durch Systeme koaxialer Hohlwellen (11 bis 14) gehalten sind, die in bezug zueinander frei drehbar sind, wobei diese Systeme beweglich an der Welle (2) der Brennkraftmaschine festgelegt sind.

2. Brennkraftmaschine nach Anspruch 1, bei welcher die Anzahl der Arbeitskammern der Kolben der Schwungscheibe gerade ist, dadurch gekennzeichnet, dass ein Zusatzkolben (71) an jedem Kolbenblock (29) befestigt ist und durch einen Kolben (5c) einer anderen Arbeitskammer gesteuert wird, wobei die Tätigkeit in bezug auf jene des ersten Kolbens (5a) um «einen Takt» phasenverschoben ist.

3. Brennkraftmaschine nach einem der Ansprüche 1 bis 2, dadurch gekennzeichnet, dass der Steuermechanismus (43 bis 45) der Kolben (5) an einem der Enden einer Pleuelstange (46) und die Ausgleichsvorrichtung (47, 51 bis 53) an dem anderen der Enden der Pleuelstange (46) festgelegt ist.

4. Brennkraftmaschine nach Anspruch 1 oder 2, dadurch gekennzeichnet, dass der Steuermechanismus (44, 63) der Kolben (5) über einen Zapfen (70) direkt mit der Ausgleichsvorrichtung (61 bis 64) verbunden ist.

5. Brennkraftmaschine nach Anspruch 3 oder 4, dadurch gekennzeichnet, dass der Steuermechanismus der Kolben (5) einen mit dem Gehäuse kraftschlüssig verbundenen Zahnkranz (44) und ein Zahnrad (43 oder 63) aufweist, das für eine schlupffreie Abwälzung an dem Zahnkranz (44) ausgelegt und durch die Schwungscheibe gehalten ist.

6. Brennkraftmaschine nach Anspruch 3, dadurch gekennzeichnet, dass die Ausgleichsvorrichtung ein schlupffreies Zahnsegment (52) für ein Zahnsegment (51) aufweist, welches an dem anderen Ende des Steuerarms der Kolben (5) befestigt ist.

7. Brennkraftmaschine nach Anspruch 4 und 5, dadurch gekennzeichnet, dass die Ausgleichsvorrichtung ein Zahnrad (61) für die schlupffreie Abwälzung an einem elliptischen Zahnkranz (62) aufweist, der auf dem Zahnrad (63) des Kolbensteuermechanismus mittig angeordnet ist, wobei das erstgenannte Zahnrad (61) über einen Zapfen (70) mit dem Zahnrad (63) des Kolbensteuermechanismus verbunden ist.

## Claims

1. A rotary piston internal combustion engine, in the housing of which (1) pistons (5) and a disk flywheel (3) cooperate, which is formed by a flywheel which comprises on its inner surface piston blocks (29) between which pistons (5) are inserted, which define work chambers (20 to 27), whereby the flywheel comprises on its periphery for each piston (5) inlet openings (7) and outlet openings (6) which cooperate with fuel injection devices or sparking plugs (8), inlet ducts (9), outlet ducts (10), which are provided for this purpose in the housing (1), whereby the number whereof differs by a unity or group from the number of pistons (5) and each piston (5) is controlled in its work chamber by a cycloidal gear mechanism (43, 44, 45) characterized in that each piston is connected with a device (47, 52) for compensating the reversals, which are created at the end positions of the hypocycloidal arcs, of the cycloidal gear mechanism (43, 44, 45) and by the fact that the pistons (5, 71) and the control mechanisms therefor (43, 49) are supported by coaxial hollow shaft systems which are freely rotatable with respect to each other, said systems being fixed movably on the shaft (2) of the internal combustion engine.

2. The internal combustion engine according to claim 1, in which the number of work chambers of the pistons of the disk flywheel is even, characterized in that an additional piston (71) is fixed to the piston block (29) and is controlled by a piston (5c) of another work chamber so that the action is shifted in phase with respect to that of the first piston (5a).

3. The internal combustion engine according to claims 1 or 2, characterized in that the control mechanism (43 to 45) of the pistons (5) is fixed to one of the end of a connecting rod (46) and the compensation device (47, 51–53) to the other of the ends of the connecting rod (48).

4. The internal combustion engine according to claim 1 or 2, characterized in that the control mechanism (44, 63) of the pistons (5) is connected by a pin (70) directly to the compensation device (61–64).

5. The internal combustion engine according to claim 3 or 4, characterized in that the control mechanism of the pistons (5) comprises a gear ring (44) connected integrally to the casing and a gear wheel (43 or 53) adapted for meshing without slipping on the ring gear (44) and is held by the disk flywheel.

6. The internal combustion engine according to claim 3, characterized in that the compensation device comprises a toothed segment (52) which does not slip on a toothed segment (51) which is fixed to the other end of the control arm of the piston (5).

7. The internal combustion engine according to claim 4 and 5, characterized in that the compensation device comprises a gear wheel (61) for slip-free engagement with an elliptic ring wheel (62), which is disposed centrally on the gear wheel (63) of the piston control mechanism, the first mentioned gear wheel (61) being connnected by a pin (70) to the gear wheel (63).

## Revendications

1. Moteur à combustion interne à piston rotatif, dans le carter (1) duquel coopèrent un piston (5) et un volant (3) en forme de disque qui présente sur sa face interne des cales (29) à piston entre lesquelles s'insèrent des pistons (5) et qui délimitent des chambres d'explosion (20 à 27), ledit volant (3) présentant sur son côté périphérique pour chacun des pistons (5) des orifices d'entrée (7) et de sortie (6) qui coopèrent avec des dispositifs d'injection de carburant ou des bougies d'allumage (8), des canaux d'injection (9) des canaux de sortie (10) prévus à cet effet dans le carter (1) leur nombre étant différent d'une unité, ou d'un groupe, de celui des pistons (5), chaque piston (5) étant commandé dans sa chambre d'explosion par un mécanisme cycloïdal (43, 44, 45) caractérisé par le fait que chaque piston est relié à un dispositif (47, 52) d'équilibrage des inversions produites aux points extrêmes des arcs hypocycloïdes du mécanisme cycloïdal (43, 44, 45) et par le fait que les pistons (5, 71) et leurs mécanismes de commande (43, 49) sont supportés par des systèmes d'arbres creux co-axiaux (11 à 14) qui tournent librement réciproquement, lesdits systèmes étant fixés de manière mobile sur l'arbre (2) du moteur à combustion interne.

2. Moteur à combustion interne selon la revendication 1, dans lequel le nombre des chambres d'explosion des pistons du volant en forme de disque est un nombre pair, caractérisé par le fait qu'un piston complémentaire (71) est fixé sur chaque cale à piston (29) et commandé par un piston (5c) d'une autre chambre d'explosion, l'explosion étant décalée d'une phase par rapport à celle du premier piston (5a).

3. Moteur à combustion interne selon l'une des revendications 1 ou 2, caractérisé par le fait que le mécanisme de commande (43 à 49) des pistons (5) est fixé sur l'une des extrémités d'une bielle (46) et le dispositif d'équilibrage (47, 51 à 53) sur l'autre des extrémités de la bielle (48).

4. Moteur à combustion interne selon la revendication 1 ou 2, caractérisé par le fait que le mécanisme de commande (44, 63) des pistons (5) est relié par un tourillon (70) directement au dispositif d'équilibrage (61 à 64).

5. Moteur à combustion interne selon la revendication 3 ou 4, caractérisé par le fait que le mécanisme des commandes des pistons (5) présente une couronne dentée (44) reliée solidairement au carter et un pignon (43 ou 53) conçu pour engréner sans patiner sur la couronne (44) et maintenu par le volant en forme de disque.

6. Moteur à combustion interne selon la revendication 3, caractérisé par le fait que le dispositif d'équilibrage présente un segment denté (52) qui ne patine pas, destiné à un segment denté (51) qui est fixé à l'autre extrémité du bras de commande du piston (5).

7. Moteur à combustion interne selon les revendications 4 et 5, caractérisé par le fait que le dispositif d'équilibrage présente un pignon (61) destiné à engréner sans patiner sur une couronne dentée elliptique (62) disposée centralement sur le pignon (63) du mécanisme de commande des pistons, le pignon cité en premier (61) étant relié par un tourillon (70) au pignon (63).

FIG.1

FIG.2

0 036 220

FIG.3

17

FIG. 4

FIG. 5

FIG. 6

FIG.6a

FIG.6b

FIG.6c

FIG.6d

FIG.6e

0 036 220

FIG. 7

25

FIG. 8

FIG. 9

FIG. 10

FIG. 11

FIG. 12

0 036 220

FIG. 13

FIG. 14

FIG. 15

33

FIG.16

FIG.17

FIG. 18

FIG. 19